# EUROPÄISCHE PATENTSCHRIFT

(11) **EP 3 220 777 B1**
(45) Veröffentlichungstag und Bekanntmachung des Hinweises auf die Patenterteilung: **09.01.2019**
(21) Anmeldenummer: 15804679.7
(22) Anmeldetag: 27.10.2015
(51) Int. Cl.: A47C 21/04, A47C 31/00, A47C 27/08, A62B 18/00, B62B 9/00, A61F 7/00

(54) **LUFTZUFÜHREINRICHTUNG**
AIR-SUPPLY DEVICE
DISPOSITIF D'AMENÉE EN AIR

(30) Priorität: 21.11.2014 DE 102014017533; 31.07.2015 CN 201510461524
(43) Veröffentlichungstag der Anmeldung: 27.09.2017
(73) Patentinhaber: Avea Capital Ltd., Road Town Tortola (VG)
(72) Erfinder: JUD, Peter, 72555 Metzingen (DE); LORENZ, Alexander, 73728 Esslingen (DE); ITAL, Mark, 70193 Stuttgart (DE)
(74) Vertreter: Reinhardt, Annette
(86) Internationale Anmeldenummer: PCT/EP2015/002428
(87) Internationale Veröffentlichungsnummer: WO 2016/078773

(56) Entgegenhaltungen:
- EP-A1- 0 280 213
- EP-A1- 1 645 258
- WO-A1-2004/056240
- WO-A2-2009/133447

## Beschreibung

Die Erfindung betrifft eine Luftzuführeinrichtung der im Oberbegriff des Anspruchs 1 angegebenen Gattung.

Aus der WO 2004/092658 A1 ist eine Luftzuführeinrichtung bekannt, die ein Kunststoffgehäuse besitzt, das eine Öffnung zum Austritt der Luft aufweist. Die Öffnung ist von einem luftdurchlässigen textilen Material abgedeckt, das sich an einem Gitter abstützt.

Aus der WO 96/39905 A1 geht eine Matratze für ein Baby hervor, die am Bodenteil und an Seitenteilen eine Vielzahl von Luftöffnungen aufweist. Die Luftöffnungen sind von einem Gewebe abgedeckt.

Die EP 1 645 258 A1 offenbart eine Einrichtung zur Verbesserung des Luftstroms unter einem Patienten. Die Einrichtung besitzt eine Auflage, die ein luftdurchlässiges dreidimensionales Material aufweist und mit einer Luftzufuhr verbunden ist.

Aus der EP 0 280 213 A1 geht ein Kissen für Sitze in Kraftfahrzeugen hervor, das eine luftdurchlässige perforierte elastomere Beschichtung aufweist. Das Innere des Kissens ist an eine regelbare Luftzuführung angeschlossen.

Die WO 2004/056240 A1 offenbart eine Klimalufterfrischer für einen definierten Raum, der von einem Gewebe abgedeckt ist.

Der Erfindung liegt die Aufgabe zugrunde, eine Luftzuführeinrichtung der gattungsgemäßen Art zu schaffen, die einen einfachen Aufbau besitzt und einen Benutzer nicht stört.

Diese Aufgabe wird durch eine Luftzuführeinrichtung mit den Merkmalen des Anspruchs 1 gelöst.

Es ist vorgesehen, dass die Luftzuführeinrichtung einen flächigen, flexiblen Abschnitt aufweist. Dadurch wird eine geringe Beeinträchtigung eines mit dem flexiblen Abschnitt in Kontakt kommenden Bedieners erreicht. Durch den flächigen, flexiblen Abschnitt ist die Luftzuführeinrichtung vielfältig einsetzbar und kann sich an einen zur Verfügung stehenden Bauraum gut anpassen. Die Luftzuführeinrichtung besitzt zwei Flachseiten, zwischen denen der Innenraum gebildet ist. Um ein gleichmäßiges Ausströmen von Atemluft über den gesamten Ausströmbereich zu erreichen, ist in dem Innenraum zumindest am Ausströmbereich mindestens ein Abstandsmittel angeordnet, das eine Anlage des Ausströmbereichs an der zweiten Flachseite verhindert. Durch das gleichmäßige Ausströmen der Atemluft über den gesamten Ausströmbereich ist der durch die zugeführte Atemluft hervorgerufene Luftzug für den Bediener nicht oder nur geringfügig spürbar. Es hat sich gezeigt, dass ein Luftstrom mit einer Strömungsgeschwindigkeit ab etwa 1 m/s von einem Bediener als unangenehm empfunden werden kann. Vorteilhaft ist die Strömungsgeschwindigkeit des durch den Ausströmbereich austretenden Luftstroms deutlich geringer als 1 m/s, insbesondere nicht größer als etwa 0,25 m/s. Der flexible Abschnitt kann dabei so ausgebildet sein, dass durch Zusammendrücken der ersten und der zweiten Flachseite der Ausströmbereich mindestens abschnittsweise zur Anlage an der zweiten Flachseite gebracht werden kann. In unbelastetem Zustand, also wenn keine äußeren Kräfte auf den flexiblen Abschnitt der Luftzuführeinrichtung wirken, ist jedoch ein Abstand zwischen der ersten und der zweiten Flachseite gegeben.

Vorteilhaft erstreckt sich mindestens ein Abstandsmittel von der ersten bis zu der zweiten Flachseite. Das Abstandsmittel erstreckt sich dadurch quer durch den gesamten Innenraum und führt zu Luftverwirbelungen, die eine bessere und gleichmäßigere Verteilung der Atemluft in dem Innenraum und dadurch ein gleichmäßigeres Ausströmen aus dem Innenraum durch das luftdurchlässige Material bewirken. Vorteilhaft ist mindestens ein Abstandsmittel flexibel, so dass sich eine hohe Flexibilität der Luftzuführeinrichtung ergibt. Wenn die Luftzuführeinrichtung von einem Bediener nach Art eines Kragens um den Hals getragen wird, ergibt sich dadurch ein hoher Tragekomfort.

Ein einfacher Aufbau ergibt sich, wenn das Abstandsmittel mindestens teilweise von einem Abstandsgewirke gebildet ist. Der flächige, flexible Abschnitt kann dadurch aus lediglich drei Schichten, nämlich dem flexiblen, luftdurchlässigen Material, dem Abstandsgewirke und einem an der zweiten Flachseite angeordneten Material gebildet sein. Durch den einfachen Aufbau kann auch die Außenform der Luftzuführeinrichtung einfach auf den gewünschten Anwendungszweck angepasst werden, indem die Außenform des flächigen, flexiblen Abschnitts in der gewünschten Größe hergestellt wird. Dadurch ist die Luftzuführeinrichtung vielfältig einsetzbar.

Vorteilhaft besitzt das Abstandsgewirke Querfäden, die sich quer zum Material des Ausströmbereichs durch den Innenraum erstrecken. Das Abstandsgewirke besitzt dabei vorteilhaft mindestens einen Querfaden je Quadratzentimeter, insbesondere mindestens fünf Querfäden je Quadratzentimeter. Dadurch wird eine ausreichend hohe Stabilität und Flexibilität und gleichzeitig eine gute Verwirbelung der Luft im Innenraum erreicht. Das Abstandsgewirke bildet eine luftdurchlässige, dreidimensionale Struktur, die eine gleichmäßige Luftverteilung im Innenraum zwischen der ersten und der zweiten Flachseite bewirkt. Gleichzeitig stellt das Abstandsgewirke auf einfache Weise einen Abstand zwischen dem Ausströmbereich und der zweiten Flachseite sicher.

Es kann auch vorgesehen sein, dass das Abstandsmittel mindestens teilweise von einem grobporigen, flexiblen, luftdurchlässigen Material gebildet ist. Dies kann beispielsweise ein flexibler, insbesondere offenzelliger Schaumstoff sein.

Der Abstand zwischen der ersten und der zweiten Flachseite beträgt vorteilhaft mindestens 3 mm. Dadurch wird eine ausreichende Breite des Innenraums und dadurch eine gute Luftverteilung erreicht. Als vorteilhaft hat sich ein Abstand von mindestens 5 mm, insbesondere von mindestens 7 mm herausgestellt.

Das luftdurchlässige Material ist vorteilhaft ein Gewebe. Dadurch kann ein sehr gleichmäßiger Austritt der Luft erreicht werden. Ein spürbarer Luftzug für den Bediener wird dadurch vermieden. Die Webdichte des luftdurchlässigen Materials beträgt dabei vorteilhaft zwischen etwa 140 g/m² etwa 240 g/m². Es kann jedoch auch vorgesehen sein, dass das luftdurchlässige Material eine perforierte Kunststofffolie ist. Dabei ist vorteilhaft eine vergleichsweise feine Perforation vorgesehen. Der Durchmesser der Öffnungen der Kunststofffolie ist vorteilhaft kleiner als etwa 0,5 mm. Um einen gleichmäßigen Luftaustritt zu erreichen, sind vorteilhaft weniger als 300 Löcher je Quadratzentimeter vorgesehen. Um eine zu große Strömungsgeschwindigkeit der austretenden Luft zu vermeiden, ist insbesondere mehr als 1 Loch je Quadratzentimeter vorgesehen. Vorteilhaft sind mehr als 20 Löcher je Quadratzentimeter, vorzugsweise mehr als 50 Löcher je Quadratzentimeter vorgesehen.

Vorteilhaft ist an der zweiten Flachseite ein flächiges, luftundurchlässiges Material angeordnet. Das luftundurchlässige Material ist vorteilhaft eine Folie oder ein beschichtetes Gewebe. Das beschichtete Gewebe kann beispielsweise polyurethanbeschichtetes Polyestergewebe sein. Auch das Material an der zweiten Flachseite ist dabei flexibel.

Um auf einfache Weise einen Anschluss für die zuzuführende Luft herzustellen, besitzt die Luftzuführeinrichtung mindestens ein Gehäuseteil, das an dem flächigen, flexiblen Abschnitt festgelegt ist, und das die Einströmöffnung aufweist. Das Gehäuseteil besteht vorteilhaft aus einem formstabilen Material, beispielsweise aus Kunststoff. Dadurch wird eine ausreichende Stabilität der Luftzuführeinrichtung erreicht.

Um zu vermeiden, dass in den Atemluftbereich Umgebungsluft eintritt, ist vorteilhaft vorgesehen, dass die Luftzuführeinrichtung Mittel zur Erzeugung mindestens eines Abschirmluftstroms aufweist, der den Atemluftbereich mindestens teilweise von der Umgebung abschirmt. Dabei ist die Strömungsgeschwindigkeit des Abschirmluftstroms vorteilhaft größer als die Strömungsgeschwindigkeit des Zuführluftstroms zur Zufuhr von Atemluft. Die Strömungsgeschwindigkeit des Zuführluftstroms beträgt vorteilhaft nicht mehr als 0,25 m/s. Die Strömungsgeschwindigkeit des Abschirmluftstroms beträgt vorteilhaft von etwa 0,3 m/s bis etwa 1,5 m/s.

Ausführungsbeispiele der Erfindung werden im Folgenden anhand der Zeichnung erläutert. Es zeigen:
- Fig. 1: eine schematische perspektivische Darstellung eines ersten Ausführungsbeispiels einer Luftzuführeinrichtung,
- Fig. 2: eine schematische Seitenansicht der Luftzuführeinrichtung aus Fig. 1,
- Fig. 3: eine perspektivische, geschnittene Darstellung des Aufbaus des flexiblen Abschnitts der Luftzuführeinrichtung aus den Figuren 1 und 2,
- Fig. 4: eine schematische Darstellung eines Ausführungsbeispiels einer Luftzuführeinrichtung an einem Bediener,
- Fig. 5: eine perspektivische Darstellung der Luftzuführeinrichtung aus Fig. 4,
- Fig. 6 und 7: schematische Darstellungen von weiteren Ausführungsbeispielen von Luftzuführeinrichtungen.

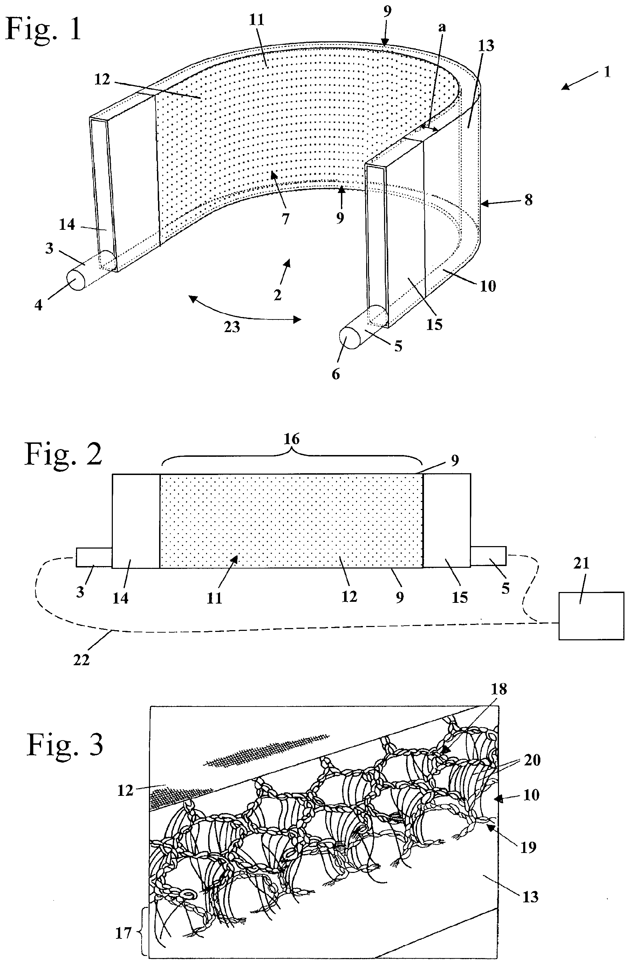

Fig. 1 zeigt schematisch eine Luftzuführeinrichtung 1. Die Luftzuführeinrichtung 1 ist vorteilhaft vorgesehen, um einem Bediener Atemluft zuzuführen, beispielsweise, wenn der Bediener sich in einem Bereich bewegt, in dem die Luft verschmutzt ist oder wenn der Bediener allergisch gegen Bestandteile der Umgebungsluft, beispielsweise Pollen oder dgl. ist. Die Luftzuführeinrichtung 1 besitzt einen ersten Anschlussstutzen 3, an dem eine erste Einströmöffnung 4 vorgesehen ist, sowie einen zweiten Anschlussstutzen 5 mit einer zweiten Einströmöffnung 6. Über die Einströmöffnungen 4 und 6 kann im Betrieb Atemluft, insbesondere vorgereinigte Atemluft, in einen Atemluftbereich 2 zugeführt werden. Auch eine einzige Einströmöffnung oder eine größere Anzahl von Einströmöffnungen kann vorteilhaft sein. Die Anschlussstutzen 3 und 5 sind jeweils an einem Gehäuseteil 14, 15 der Luftzuführeinrichtung 1 ausgebildet. Die beiden Gehäuseteile 14 und 15 sind im Ausführungsbeispiel flach ausgebildet.

An den Gehäuseteilen 14 und 15 ist jeweils eine Seite eines flexiblen Abschnitts 16 (Fig. 2) der Luftzuführeinrichtung 1 gehalten. Wie die Figuren 1 und 2 zeigen, ist der flexible Abschnitt 16 länglich ausgebildet, und die Gehäuseteile 14 und 15 sind an seinen Schmalseiten angeordnet. Der flexible Abschnitt 16 besitzt eine erste, dem Atemluftbereich 2 zugewandte Flachseite 7 sowie eine zweite, dem Atemluftbereich abgewandte Flachseite 8. Die Flachseite 8 zeigt im Betrieb vom Benutzer weg. Der flexible Abschnitt 16 besitzt außerdem zwei Stirnseiten 9, die die Längsseiten des flexiblen Abschnitts 16 bilden. Die Flachseiten 7 und 8 und die Stirnseiten 9 begrenzen einen Innenraum 10, in den über die Einströmöffnungen 4 und 6 einströmende Atemluft mündet.

An der ersten Flachseite 7 ist der flexible Abschnitt 16 von einem luftdurchlässigen Material 12 bedeckt, das einen Ausströmbereich 11 für die Atemluft bildet. Das luftdurchlässige Material 12 weist eine Vielzahl von kleinen Öffnungen auf, über die die Atemluft gleichmäßig über die Fläche des Ausströmbereichs 11 verteilt in den Atemluftbereich 2 ausströmt. Die Luft strömt dabei senkrecht zur Fläche des luftdurchlässigen Materials 12 aus. Der Ausströmbereich 11 begrenzt den Innenraum 10, und die Luft strömt aus dem Innenraum 10 durch den Ausströmbereich 11 in den Atemluftbereich 2.

Das luftdurchlässige Material 12 kann beispielsweise ein Gewebe sein. Das Gewebe kann aus synthetischen Fasern oder aus Naturfasern oder einer Mischung hieraus bestehen. Die Webdichte des Gewebes beträgt vorteilhaft zwischen etwa 140 g/m² und etwa 240 g/m². Das Gewebe kann beispielsweise ein Leinwandgewebe, Gabardine oder Nesselgewebe sein. Durch die engmaschige Ausbildung des Gewebes wird ein gleichmäßiger Überdruck im Innenraum und dadurch ein gleichmäßiger Austritt der Luft unter Überdruck gegenüber der Umgebung erreicht. Dadurch wird Umgebungsluft aus dem Atemluftbereich verdrängt. Aufgrund der vergleichsweise großen Austrittsfläche für die Luft wird eine geringe Strömungsgeschwindigkeit der austretenden Luft erreicht. Die Strömungsgeschwindigkeit beträgt vorteilhaft weniger als 0,25 m/s. Die Austrittsfläche beträgt vorteilhaft zwischen etwa 5 cm² und etwa 500 cm². Dadurch wird ein spürbarer Luftzug für den Bediener vermieden.

Vorzugsweise ist das Gewebe weitgehend formstabil, so dass der flexible Abschnitt 16 kein Stützmaterial benötigt, um seine Form zu behalten. Das luftdurchlässige Material 12 ist jedoch so flexibel, dass der flexible Abschnitt 16 mit geringem Kraftaufwand gebogen werden kann, und zwar in Richtung des Doppelpfeils 23. Dabei werden die Gehäuseteile 14 und 15 näher aufeinander zu oder weiter voneinander weg bewegt. Dadurch kann die Luftzuführeinrichtung 1 leicht an den Benutzer angepasst werden. Ein Verbiegen um eine in Längsrichtung des flexiblen Abschnitts 16 liegende Achse ist durch die Gehäuseteile 14 und 15 vermieden.

An der zweiten, dem Atemluftbereich 2 abgewandten Flachseite 8 ist ein luftundurchlässiges Material 13 vorgesehen. Das luftundurchlässige Material 13 kann beispielsweise eine Folie oder ein beschichtetes Gewebe sein. Das beschichtete Gewebe kann insbesondere ein polyurethanbeschichtetes Gewebe sein. Das luftundurchlässige Material 13 ist flexibel, so dass der flexible Abschnitt 16 leicht gebogen werden kann. Durch das luftundurchlässige Material 13 ist sichergestellt, dass Atemluft nur in den Atemluftbereich 2 zugeführt wird. Das luftundurchlässige Material 13 erstreckt sich vorteilhaft auch an den Stirnseiten 9.

Es kann auch vorgesehen sein, dass das luftdurchlässige Material eine perforierte Kunststofffolie ist. Der Durchmesser der Öffnungen der Kunststofffolie ist dabei vorzugsweise kleiner als etwa 0,5 mm. Vorzugsweise sind mehr als 1 Loch, insbesondere mehr als etwa 20 Löcher, vorzugsweise mehr als etwa 50 Löcher je Quadratzentimeter und insbesondere weniger als 300 Löcher je Quadratzentimeter vorgesehen.

Wie Fig. 1 zeigt, besitzt die erste Flachseite 7 zur zweiten Flachseite 8 über den gesamten flexiblen Abschnitt 16 einen etwa konstanten Abstand a. Der Abstand a beträgt vorteilhaft mindestens 3 mm, insbesondere mindestens 5 mm, vorzugsweise mindestens 7 mm. Um den gleichmäßigen Abstand a zwischen der ersten Flachseite 7 und der zweiten Flachseite 8 zu erhalten, ist zwischen der ersten Flachseite 7 und der zweiten Flachseite 8 ein Abstandsmittel vorgesehen, das im Folgenden noch näher beschrieben wird.

Wie Fig. 2 zeigt, sind die Anschlussstutzen 3 und 5 über in Fig. 2 schematisch gezeigte Schläuche 22 mit einer Gebläseeinheit 21 verbunden. Die Gebläseeinheit 21 besitzt vorteilhaft ein Gebläse sowie eine Filtereinheit mit einem oder mehreren Filterelementen, die die Umgebungsluft filtern. Die Umgebungsluft wird vom Gebläse unter Überdruck zur Luftzuführeinrichtung 1 zugeführt.

Fig. 3 zeigt den Aufbau des flexiblen Abschnitts 16 im Einzelnen. Zwischen dem luftdurchlässigen Material 12 und dem luftundurchlässigen Material 13 ist im Ausführungsbeispiel ein Abstandsgewirke 17 vorgesehen. Das Abstandsgewirke 17 besitzt eine erste Seite 18, an der das luftdurchlässige Material 12 anliegt, sowie eine zweite Seite 19, an der das luftundurchlässige Material 13 anliegt. Die beiden Seiten 18 und 19 sind über Querfäden 20 miteinander verbunden. An den Seiten 18 und 19 besitzt das Abstandsgewirke eine filigrane Struktur mit einer Vielzahl großer Öffnungen, die einen guten Luftdurchtritt durch das luftdurchlässige Material 12 erlauben und das luftdurchlässige Material 12 nur geringfügig und nicht dichtend abdecken.

Die Querfäden 20 stellen aufgrund ihrer Steifigkeit einen Abstand zwischen den beiden Seiten 18 und 19 des Abstandsgewirkes 17 sicher. Die Querfäden 20 bewirken gleichzeitig eine Verwirbelung der in den Innenraum 10 einströmenden Luft. Dadurch wird eine gleichmäßige Verteilung der Luft im Innenraum 10 erreicht. Das Abstandsgewirke 17 ist flexibel. Es kann vorgesehen sein, dass das Abstandsgewirke 17 lediglich biegbar ist, so dass die Luftzuführeinrichtung 1, wie in Fig. 1 durch den Doppelpfeil 23 angedeutet, verbogen werden kann. Es kann jedoch auch vorgesehen sein, dass die Querfäden 20 ein Zusammendrücken des Abstandsgewirkes 17 erlauben. In unbelastetem Zustand besitzen die Seiten 18 und 19 des Abstandsgewirkes 17 jedoch den Abstand a zueinander, so dass sich die in den Innenraum 10 einströmende Luft gleichmäßig über den gesamten Ausströmbereich 11 verteilen kann. Das Abstandsgewirke 17 besitzt mindestens einen Querfaden je Quadratzentimeter, vorzugsweise mindestens fünf Querfäden je Quadratzentimeter.

Anstatt eines Abstandsgewirkes 17 kann als Abstandsmittel zwischen der ersten Flachseite 7 und der zweiten Flachseite 8 auch ein grobporiges, flexibles, luftdurchlässiges Material vorgesehen sein. Dies kann beispielsweise ein Schaumstoff, insbesondere ein offenzelliger Schaumstoff aus Kunststoff sein. Es kann auch vorgesehen sein, als Abstandsmittel eine Vielzahl von Abstandselementen vorzusehen, die einzeln mit dem luftdurchlässigen Material 12 und/oder mit dem luftundurchlässigen Material 13 verbunden sind.

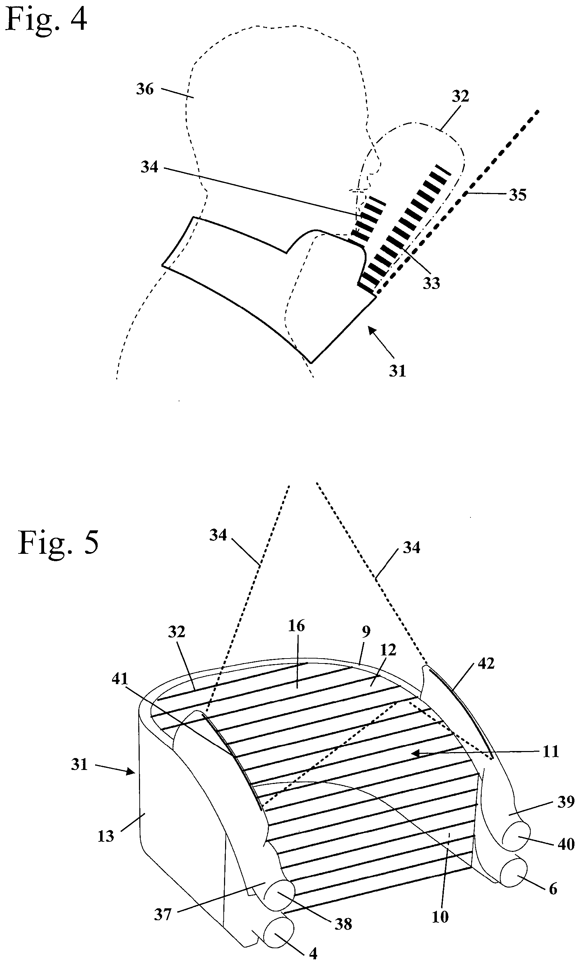

Fig. 4 zeigt ein Ausführungsbeispiel einer Luftzuführeinrichtung 31, die nach Art eines Kragens von einem Benutzer 36 um den Hals getragen wird. Die Luftzuführeinrichtung 31 erzeugt einen Zuführluftstrom 33, der Atemluft in einen Atemluftbereich 32 zuführt. Der Atemluftbereich 32 bedeckt dabei vorteilhaft Mund und Nase des Benutzers 36. Der Zuführluftstrom 33 wird dabei durch den Ausströmbereich 11 der Luftzuführeinrichtung 31, der in Fig. 4 nicht im Einzelnen gezeigt ist, zugeführt. Die Luftzuführeinrichtung 31 besitzt außerdem Mittel zur Erzeugung von Abschirmluftströmen 34 und 35. Vorteilhaft ist mindestens ein Abschirmluftstrom 34 vorgesehen, der den Atemluftbereich 32 seitlich gegenüber der Umgebung abschirmt. Der Abschirmluftstrom 35 ist schräg nach vorne gerichtet und schirmt den Atemluftbereich 32 vom Benutzer 36 aus gesehen nach vorne ab. Dadurch wird zu Mund und Nase des Benutzers 36 nur vorgereinigte Luft geführt, die vom Zuführluftstrom 33 in den Atemluftbereich 32 einströmt. Die Strömungsgeschwindigkeit der Abschirmluftströme 34 und 35 ist dabei vorteilhaft deutlich größer als die Strömungsgeschwindigkeit des Zuführluftstroms 33. Dadurch wird eine effektive Abschirmung gegenüber der Umgebungsluft erreicht. Die Strömungsgeschwindigkeit eines Abschirmluftstroms 34, 35 beträgt vorteilhaft etwa 0,3 m/s bis etwa 2,5 m/s und die Strömungsgeschwindigkeit des Zuführluftstroms 33 weniger als etwa 0,25 m/s.

Fig. 5 zeigt die Luftzuführeinrichtung 31 im Einzelnen. Der Aufbau der Luftzuführeinrichtung 31 entspricht im Wesentlichen dem der Luftzuführeinrichtung 1, wobei gleiche Bezugszeichen in allen Ausführungsbeispielen einander entsprechende Elemente bezeichnen. Der Atemluftbereich 2 wird vom Ausströmbereich 11 begrenzt, der am flexiblen Abschnitt 16 der Luftzuführeinrichtung 31 ausgebildet ist. Der Ausströmbereich 11 ist an flexiblem, luftdurchlässigem Material 12 ausgebildet, durch den Luft aus dem Innenraum 10 ausströmt. An der im Betrieb nach oben gewandten Stirnseite 9 sind seitlich Ausströmöffnungen 41 und 42 vorgesehen, die vergleichsweise schmal ausgebildet sind und einen geringen Querschnitt aufweisen. Die Ausströmöffnung 41 steht über einen Anschlussstutzen 37, an dem eine dritte Einströmöffnung 38 ausgebildet ist, mit einer in Fig. 4 nicht gezeigten Gebläseeinheit in Verbindung. Die Ausströmöffnung 42 steht über einen vierten Anschlussstutzen 39, an dem eine vierte Einströmöffnung 40 vorgesehen ist, ebenfalls mit der Gebläseeinheit in Verbindung. Dabei kann über alle Einströmöffnungen 4, 6, 38 und 40 Luft unter dem gleichen Druck zugeführt werden. Es kann jedoch auch vorgesehen sein, dass den Einströmöffnungen 38 und 40 Luft unter erhöhtem Druck zugeführt wird, um die Abschirmwirkung gegenüber der Umgebung zu verbessern. Die seitlichen Ausströmöffnungen 41 und 42 erzeugen vorteilhaft den seitlichen Abschirmluftstrom 34. Die Ausströmöffnung zur Erzeugung des nach vorne gerichteten Abschirmluftstroms 35 ist in Fig. 5 nicht gezeigt. Die Ausrichtung der Abschirmluftströme 34 kann dabei geeignet gewählt werden, um zum einen eine effektive Abschirmung zu erreichen und zum anderen für den Bediener nicht oder kaum spürbar zu sein.

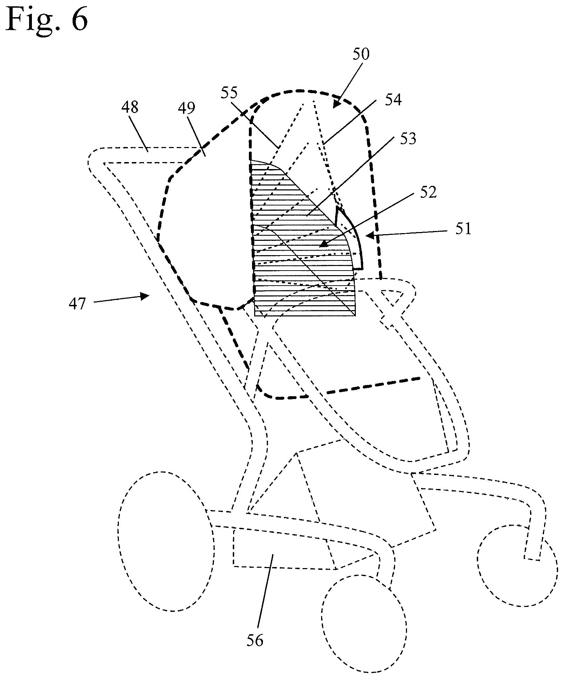

Fig. 6 zeigt ein Ausführungsbeispiel einer Luftzuführeinrichtung 51 an einem Buggy 47. Der Buggy 47 besitzt einen Schiebegriff 48 sowie ein Verdeck 49, das den Bereich, in dem der Kopf eines im Buggy 47 sitzenden Kindes angeordnet ist, bezogen auf die Fahrtrichtung nach oben und hinten abschirmt. Das Verdeck 49 besitzt eine Öffnung 50 nach vorne. Um das Eintreten von Umgebungsluft unter das Verdeck 49 zu vermeiden und gleichzeitig vorgereinigte Atemluft für das Kind zur Verfügung zu stellen, ist die Luftzuführeinrichtung 51 vorgesehen. Die Luftzuführeinrichtung 51 ist vorteilhaft entsprechend der Luftzuführeinrichtung 31 ausgebildet. Die Luftzuführeinrichtung 51 führt in einen Atemluftbereich 52 einen Zuführluftstrom 53 zu. Der Zuführluftstrom 53 tritt dabei durch luftdurchlässiges Material 12 (Fig. 5) aus einem Innenraum 10 der Luftzuführeinrichtung 51 aus. Die Luftzuführeinrichtung 51 besitzt außerdem Ausströmöffnungen 41 und 42, die den in Fig. 5 gezeigten Ausströmöffnungen 41 und 42 entsprechen und die in Fig. 6 nicht im Einzelnen gezeigt sind. Durch die Ausströmöffnungen 41 und 42 strömen Abschirmluftströme 54 und 55 aus, die den Bereich unter dem Verdeck 49 von der Umgebung abschirmen. Die Abschirmluftströme 54 und 55 können dabei im Bereich der Öffnung 50 strömen. Im Ausführungsbeispiel sind zwei Abschirmluftströme 54 und 55 vorgesehen. Auch ein einziger Abschirmluftstrom 54 oder 55 kann, insbesondere zur Vermeidung von Verwirbelungen, jedoch auch zweckmäßig sein. Die Luftzuführeinrichtung 51 besitzt eine Gebläseeinheit 56, die im Ausführungsbeispiel unterhalb der Sitzfläche des Buggys 47 am Rahmen des Buggys 47 festgelegt ist.

Auch andere Einsatzgebiete für Luftzuführeinrichtungen 1, 31, 51 können zweckmäßig sein.

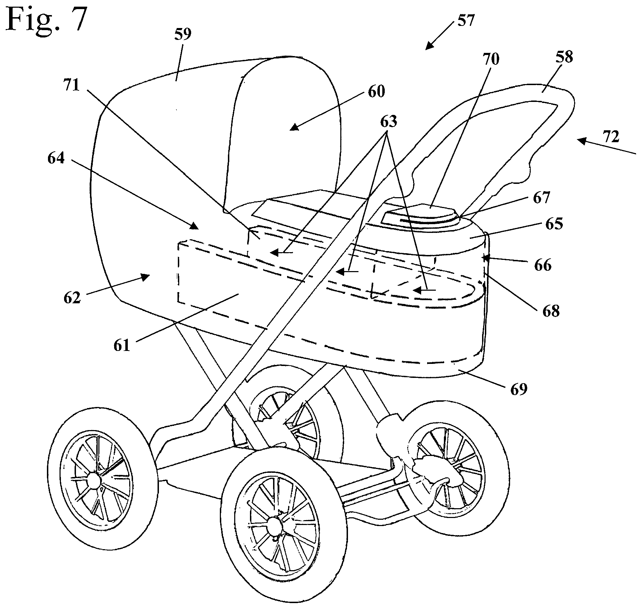

In Fig. 7 ist ein Ausführungsbeispiel einer Luftzuführeinrichtung 61 gezeigt, die an einem Kinderwagen 57 angeordnet ist. Der Kinderwagen 57 besitzt einen Schiebegriff 58, der zum Schieben des Kinderwagens 57 in einer Schieberichtung 72 dient. Der Kinderwagen 57 besitzt eine Wanne 69, in der ein Innenraum 64 ausgebildet ist, in den ein Baby gelegt werden kann. Die Wanne 69 kann in üblicher Weise aus weichem oder formstabilem Material ausgebildet sein und vom Gestell des Kinderwagens 57 abnehmbar sein. Im Kopfbereich wölbt sich ein Verdeck 59 über die Wanne 69. An dem Verdeck 59 ist eine Öffnung 60 ausgebildet. Im Innenraum 64 ist eine Luftzuführeinrichtung 61 angeordnet, die zur Zufuhr von Atemluft dient. Die Luftzuführeinrichtung 61 ist entsprechend der Luftzuführeinrichtung 1 ausgebildet und führt Atemluft mit geringer Strömungsgeschwindigkeit in den Innenraum 64 zu. Die Atemluft kann über die Öffnung 60 in die Umgebung ausströmen und verhindert dadurch das Eindringen verschmutzter Umgebungsluft durch die Öffnung 60 in den Innenraum 64.

Zur Versorgung der Luftzuführeinrichtung 61 mit Atemluft ist eine Gebläseeinheit 66 vorgesehen. Die Gebläseeinheit 66 umfasst vorteilhaft ein Gebläse zur Ansaugung von Umgebungsluft und eine Filtereinheit zur Reinigung der Umgebungsluft. Die Wanne 69 ist in dem nicht vom Verdeck 59 überspannten Bereich von einer Abdeckung 65 abgedeckt. Die Abdeckung 65 schützt den Innenraum 64 und ein im Innenraum 64 liegendes Baby vor Sonne und Regen. Die Abdeckung 65 kann vorteilhaft aus Stoff oder Kunststoff gefertigt sein und mit einem oder mehreren Magneten, Riemen, Klettverschlüssen, Druckknöpfen oder dgl. an der Wanne 69 befestigt sein. An der Abdeckung 65 ist eine Ansaugöffnung 67 der Gebläseeinheit 66 vorgesehen, die im Ausführungsbeispiel an einem Ansaugteil 70 ausgebildet ist. Das Ansaugteil 70 ist in einer Öffnung der Abdeckung 65 angeordnet. Es kann jedoch auch vorgesehen sein, dass die Ansaugöffnung 67 unmittelbar an der Abdeckung 65 ausgebildet ist. Die Ansaugöffnung 67 ist im Ausführungsbeispiel als Schlitz ausgebildet, der entgegen der Schieberichtung 72 des Kinderwagens 57 öffnet.

Im Ausführungsbeispiel ist im Innenraum 64 im oberen Teil des Fußbereichs ein Verbindungsteil 68 angeordnet, das das Gebläse und die Filtereinheit umfassen kann. Es kann auch vorteilhaft sein, die Filtereinheit ganz oder teilweise in der Abdeckung 65 anzuordnen. Dadurch lässt sich die wirksame Filterfläche auf einfache Weise vergrößern. Das Verbindungsteil 68 verbindet die Abdeckung 65 mit der Luftzuführeinrichtung 61. Über das Verbindungsteil 68 strömt die Atemluft in die Luftzuführeinrichtung ein. Dabei kann die Zufuhr von Atemluft in einem mittigen Bereich der Luftzuführeinrichtung 61 vorgesehen sein. Die Luftzuführeinrichtung 61 verläuft um den Fußbereich der Wanne 69 und erstreckt sich an beiden Längsseiten der Wanne 69 bis etwa in den Kopfbereich der Wanne 69. Innerhalb der Wanne 69 ist ein Atemluftbereich 61 ausgebildet, in den die Luftzuführeinrichtung 61 einen Zuführluftstrom 63 zuführt. Die Luftzuführeinrichtung 61 erstreckt sich vorteilhaft über mehr als die Hälfte der Höhe der Wanne 69. Dadurch wird eine große Fläche des Ausströmbereichs 71 erreicht werden.

Es kann auch vorgesehen sein, dass die Abdeckung 65 mit der Gebläseeinheit 66, die insbesondere in dem Verbindungsteil 68 angeordnet sein kann, ohne eine Luftzuführeinrichtung 61 zum Einsatz kommt. Die Gebläseeinheit 66 und die Abdeckung 65 führen in den Innenraum 64 unter der Abdeckung 65 gereinigte Atemluft zu. Durch die Abdeckung 65 kann das Eindringen von nicht gereinigter Umgebungsluft in den Innenraum 64 weitgehend vermieden werden.

## Patentansprüche

1. Luftzuführeinrichtung zur Zufuhr von Atemluft in einen Atemluftbereich, wobei die Luftzuführeinrichtung (1, 31, 51, 61) mindestens eine Einströmöffnung (4, 6) zur Zufuhr von Atemluft, einen Innenraum (10) und mindestens einen Ausströmbereich (11, 71) aufweist, über den Atemluft in den Atemluftbereich (2, 32, 52, 62) ausströmt, wobei die Einströmöffnung (4, 6) über den Innenraum (10) mit dem Ausströmbereich (11, 71) verbunden ist, und wobei der Ausströmbereich (11, 71) an einem flexiblen, luftdurchlässigen Material (12) ausgebildet ist, wobei die Luftzuführeinrichtung (1, 31, 51, 61) einen flächigen, flexiblen Abschnitt (16) aufweist, der eine erste Flachseite (7) und eine gegenüberliegende, zweite Flachseite (8) besitzt, wobei an der ersten Flachseite (7) der Ausströmbereich (11, 71) angeordnet ist, wobei zwischen der ersten Flachseite (7) und der zweiten Flachseite (8) der Innenraum (10) gebildet ist, und wobei in dem Innenraum (10) zumindest am Ausströmbereich (11, 71) mindestens ein Abstandsmittel angeordnet ist, das eine Anlage des Ausströmbereichs (11, 71) an der zweiten Flachseite (8) in unbelastetem Zustand der Luftzuführeinrichtung (1, 31, 51, 61) verhindert,
**dadurch gekennzeichnet, dass** die Luftzuführeinrichtung (1, 31, 51, 61) mindestens ein Gehäuseteil (14, 15) besitzt, das an dem flächigen, flexiblen Abschnitt (16) festgelegt ist, und das die Einströmöffnung (4, 6) aufweist.

2. Luftzuführeinrichtung nach Anspruch 1,
**dadurch gekennzeichnet, dass** mindestens ein Abstandsmittel sich von der ersten Flachseite (7) bis zu der zweiten Flachseite (8) erstreckt.

3. Luftzuführeinrichtung nach Anspruch 1 oder 2,
**dadurch gekennzeichnet, dass** mindestens ein Abstandsmittel flexibel ist.

4. Luftzuführeinrichtung nach einem der Ansprüche 1 bis 3,
**dadurch gekennzeichnet, dass** das Abstandsmittel mindestens teilweise von einem Abstandsgewirke (17) gebildet ist.

5. Luftzuführeinrichtung nach Anspruch 4,
**dadurch gekennzeichnet, dass** das Abstandsgewirke (17) Querfäden (20) besitzt, die sich quer zum Material des Ausströmbereichs (11, 71) durch den Innenraum (10) erstrecken.

6. Luftzuführeinrichtung nach Anspruch 4 oder 5,
**dadurch gekennzeichnet, dass** mindestens ein Querfaden (20) je Quadratzentimeter vorgesehen ist.

7. Luftzuführeinrichtung nach einem der Ansprüche 1 bis 6,
**dadurch gekennzeichnet, dass** das Abstandsmittel mindestens teilweise von einem grobporigen, flexiblen, luftdurchlässigen Material gebildet ist.

8. Luftzuführeinrichtung nach einem der Ansprüche 1 bis 7,
**dadurch gekennzeichnet, dass** der Abstand (a) der ersten Flachseite (7) zur zweiten Flachseite (8) mindestens 3 mm beträgt.

9. Luftzuführeinrichtung nach einem der Ansprüche 1 bis 8,
**dadurch gekennzeichnet, dass** das luftdurchlässige Material (12) ein Gewebe ist.

10. Luftzuführeinrichtung nach einem der Ansprüche 1 bis 8,
**dadurch gekennzeichnet, dass** das luftdurchlässige Material (12) eine Kunststofffolie ist.

11. Luftzuführeinrichtung nach Anspruch 10,
**dadurch gekennzeichnet, dass** der Durchmesser der Öffnungen der Kunststofffolie kleiner als 0,5 mm ist.

12. Luftzuführeinrichtung nach einem der Ansprüche 1 bis 11,
**dadurch gekennzeichnet, dass** an der zweiten Flachseite (8) ein flächiges, luftundurchlässiges Material (13) angeordnet ist.

13. Luftzuführeinrichtung nach Anspruch 12,
**dadurch gekennzeichnet, dass** das Material an der zweiten Flachseite (8) eine Folie oder ein beschichtetes Gewebe ist.

14. Luftzuführeinrichtung nach einem der Ansprüche 1 bis 13,
**dadurch gekennzeichnet, dass** die Luftzuführeinrichtung (31, 51) Mittel zur Erzeugung mindestens eines Abschirmluftstroms (34, 35, 54, 55) aufweist, der den Atemluftbereich (32, 52) mindestens teilweise von der Umgebung abschirmt.

## Claims

1. Air supply device for supplying breathing air in a breathing air region, wherein the air supply device (1, 31, 51, 61) comprises at least one inflow opening (4, 6) for the supply of breathing air, an interior (10) with at least one outflow region (11, 71), via which breathing air flows into the breathing air region (2, 32, 52, 62), wherein the inflow opening (4, 6) is connected to the outflow region (11, 71) via the interior (10) and wherein the outflow region (11, 71) is formed from a flexible, air-permeable material (12), wherein the air supply device (1, 31, 51, 61) comprises a planar flexible section (16) having a first flat side (7) and a second, opposite flat side (8), wherein the outflow region (12, 71) is located on the first flat side (7), wherein the interior (10) is formed between the first flat side (7) and the second flat side (8), and wherein at least one spacing means preventing a contact of the outflow region (11, 71) with the second flat side (8) in the unloaded state of the air supply device (1, 31, 51, 61) is located in the interior (10) at least in the outflow region (11, 71),
**characterised in that** the air supply device (1, 31, 51, 61) has at least one housing part (14, 15), which is fixed to the planar flexible section (16) and has the inflow opening (4, 6).

2. Air supply device according to claim 1,
**characterised in that** at least one spacing means extends from the first flat side (7) to the second flat side (8).

3. Air supply device according to claim 1 or 2,
**characterised in that** at least one spacing means is flexible.

4. Air supply device according to any of claims 1 to 3,
**characterised in that** the spacing means is at least partially represented by a knitted spacing fabric (17).

5. Air supply device according to claim 4,
**characterised in that** the knitted spacing fabric (17) has wefts (20) extending through the interior (10) transversely to the material of the outflow region (11, 71).

6. Air supply device according to claim 4 or 5,
**characterised in that** at least one weft (20) per square centimetre is provided.

7. Air supply device according to any of claims 1 to 6,
**characterised in that** the spacing means is at least partially represented by a coarse-pored, flexible, air-permeable material.

8. Air supply device according to any of claims 1 to 7,
**characterised in that** the distance (a) of the first flat side (7) from the second flat side (8) is at least 3 mm.

9. Air supply device according to any of claims 1 to 8,
**characterised in that** the air-permeable material (12) is a woven fabric.

10. Air supply device according to any of claims 1 to 8,
**characterised in that** the air-permeable material (12) is a plastic film.

11. Air supply device according to claim 10,
**characterised in that** the diameter of the openings of the plastic film is less than 0.5 mm.

12. Air supply device according to any of claims 1 to 11,
**characterised in that** a planar air-impermeable material (13) is arranged on the second flat side (8).

13. Air supply device according to claim 12,
**characterised in that** the material on the second flat side (8) is a film of a coated woven fabric.

14. Air supply device according to any of claims 1 to 13,
**characterised in that** the air supply device (31, 51) comprises means for generating at least one screening air flow (34, 35, 54, 55), which at least partially screens the breathing air region (32, 52) from the environment.

## Revendications

1. Dispositif d'amenée d'air pour amener de l'air respiratoire dans une zone d'air respiratoire, le dispositif d'amenée d'air (1, 31, 51, 61) comportant au moins une ouverture d'entrée (4, 6) pour amener l'air respiratoire, un espace intérieur (10) et au moins une zone de sortie (11, 71) par laquelle l'air respiratoire sort dans la zone d'air respiratoire (2, 32, 52, 62), l'ouverture d'entrée (4, 6) étant reliée à la zone de sortie (11, 71) par l'espace intérieur (10) et ladite zone de sortie (11, 71) étant formée sur un matériau flexible perméable à l'air (12), le dispositif d'amenée d'air (1, 31, 51, 61) comportant une section flexible plane (16) qui présente un premier côté plat (7) et un second côté plat opposé (8), la zone de sortie (11, 71) étant disposée sur le premier côté plat (7), l'espace intérieur (10) étant formé entre le premier côté plat (7) et le second côté plat (8), et au moins un moyen d'écartement qui empêche la zone de sortie (11, 71) de s'appliquer contre le second côté plat (8), dans la position non contrainte du dispositif d'amenée d'air (1, 31, 51, 61), étant disposé dans l'espace intérieur (10), au moins au niveau de la zone de sortie (11, 71),
**caractérisé en ce que** le dispositif d'amenée d'air (1, 31, 51, 61) comporte au moins un élément formant boîtier (14, 15) qui est fixé à la section flexible plane (16) et qui présente l'ouverture d'entrée (4, 6).

2. Dispositif d'amenée d'air selon la revendication 1,
**caractérisé en ce qu'**au moins un moyen d'écartement s'étend du premier côté plat (7) jusqu'au second côté plat (8).

3. Dispositif d'amenée d'air selon la revendication 1 ou 2,
**caractérisé en ce qu'**au moins un moyen d'écartement est flexible.

4. Dispositif d'amenée d'air selon l'une des revendications 1 à 3,
**caractérisé en ce que** le moyen d'écartement est formé au moins en partie par un tissu d'écartement à mailles (17).

5. Dispositif d'amenée d'air selon la revendication 4,
**caractérisé en ce que** le tissu d'écartement à mailles (17) comporte des fils transversaux (20) qui s'étendent transversalement par rapport au matériau de la zone de sortie (11, 71) à travers l'espace intérieur (10).

6. Dispositif d'amenée d'air selon la revendication 4 ou 5,
**caractérisé en ce qu'**il est prévu au moins un fil transversal (20) par centimètre carré.

7. Dispositif d'amenée d'air selon l'une des revendications 1 à 6,
**caractérisé en ce que** le moyen d'écartement est formé au moins en partie par un matériau perméable à l'air, flexible et à grand pores.

8. Dispositif d'amenée d'air selon l'une des revendications 1 à 7,
**caractérisé en ce que** l'écartement (a) entre le premier côté plat (7) et le second côté plat (8) est d'au moins 3 mm.

9. Dispositif d'amenée d'air selon l'une des revendications 1 à 8,
**caractérisé en ce que** le matériau perméable à l'air (12) est un tissu.

10. Dispositif d'amenée d'air selon l'une des revendications 1 à 8,
**caractérisé en ce que** le matériau perméable à l'air (12) est un film de matière plastique.

11. Dispositif d'amenée d'air selon la revendication 10,
**caractérisé en ce que** le diamètre des ouvertures du film de matière plastique est inférieur à 0,5 mm.

12. Dispositif d'amenée d'air selon l'une des revendications 1 à 11,
**caractérisé en ce qu'**il est prévu sur le second côté plat (8) un matériau plan imperméable à l'air (13).

13. Dispositif d'amenée d'air selon la revendication 12,
**caractérisé en ce que** le matériau prévu sur le second côté plat (8) est un film ou un tissu enduit.

14. Dispositif d'amenée d'air selon l'une des revendications 1 à 13,
**caractérisé en ce que** le dispositif d'amenée d'air (31, 51) comporte des moyens pour produire au moins un courant d'air de protection (34, 35, 54, 55) qui protège au moins en partie la zone d'air respiratoire (32, 52) par rapport à l'environnement.
